## Europäisches Patentamt
## European Patent Office
## Office européen des brevets

(19)

(11) Veröffentlichungsnummer: **0 210 619**
B1

(12)

# EUROPÄISCHE PATENTSCHRIFT

(45) Veröffentlichungstag der Patentschrift:
23.05.90

(21) Anmeldenummer: 86110357.0

(22) Anmeldetag: 26.07.86

(51) Int. Cl.⁵: **B32B 3/30**, B32B 33/00, B44C 3/08

(54) Mehrlagige Folie, insbesondere Heissprägefolie und Verfahren zu deren Herstellung.

(30) Priorität: 31.07.85 DE 3527412

(43) Veröffentlichungstag der Anmeldung:
04.02.87 Patentblatt 87/6

(45) Bekanntmachung des Hinweises auf die Patenterteilung:
23.05.90 Patentblatt 90/21

(84) Benannte Vertragsstaaten:
AT CH FR GB IT LI NL SE

(56) Entgegenhaltungen:
FR-A- 1 592 103
GB-A- 1 568 563
US-A- 4 322 450

(73) Patentinhaber: LEONHARD KURZ GMBH & CO.,
Schwabacher Strasse 482, D-8510 Fürth/Bayern(DE)

(72) Erfinder: Reinhart, Werner, Dr., Obere Kanalstrasse 8a,
D-8500 Nürnberg(DE)

(74) Vertreter: LOUIS, PÖHLAU, LOHRENTZ & SEGETH,
Kesslerplatz 1 Postfach 3055, D-8500 Nürnberg-1(DE)

ACTORUM AG

## Beschreibung

Die Erfindung betrifft eine mehrlagige Folie, insbesondere Heißprägefolie, bestehend aus einer Trägerfolie, einer mit einer räumlichen Musterung, vorzugsweise einer beugungsoptisch wirksamen Struktur, versehen, mindestens zwei aufeinanderfolgende Lackschichten umfassenden Dekorschicht sowie gegebenenfalls einer auf der der Trägerfolie abgekehrten Seite der Dekorschicht angeordneten Kleberschicht, wobei die beiden aufeinanderfolgenden Lackschichten deutlich unterschiedliche optische Eigenschaften aufweisen und die Grenzfläche zwischen den Lackschichten die räumliche Musterung bildet. Weiterhin befaßt sich die Erfindung mit einem Verfahren zur Herstellung von derartigen Folien, wobei auf die Trägerfolie eine erste Lackschicht aufgebracht, diese dann mit der räumlichen Musterung versehen und anschließend eine zweite Lackschicht aufgebracht wird.

Es ist bekannt, zur Verbesserung der Fälschungssicherheit von Dokumenten, beispielsweise Scheckkarten, Kreditkarten, Sparkassenbüchern oder ähnlichen Sicherheitsträgern diese mit einer Folie, insbesondere einer Heißprägefolie, zu versehen, welche mit einer räumlichen Musterung ausgestattet ist. Beispielsweise kann es sich bei einer solchen räumlichen Musterung um eine beugungsoptisch wirksame Struktur, vorzugsweise ein Hologramm, handeln, mittels dessen ganz bestimmte optische Effekte, sei es bei Bestrahlung mit natürlichem, sei es bei Bestrahlung mit Kunstlicht bestimmter Wellenlänge, erzeugt werden können. Um derartige Sicherungsfolien zu fälschen, ist es erforderlich, die räumliche Musterung genau abzunehmen und auf die gefälschte Folie zu übertragen. Dies ist nur möglich, wenn die im allgemeinen die räumliche Musterung überdeckende Lackschicht entfernt wird.

Bisher wurde bei der Einbringung von Hologrammen in Prägefolien im allgemeinen so vorgegangen, daß eine metallisierte Schicht vorhanden war, in die dann das Hologramm bzw. die sonstige beugungsoptisch wirksame Struktur eingeprägt wurde. Die mit der Struktur versehene Metallschicht wurde dann mit einer Schutzlackschicht abgedeckt, wobei man zwar Lacke gewählt hat, die zum einen sehr gut an der Metallschicht hafteten, zum anderen auch mit üblichen Lösungsmitteln kaum oder nur sehr schwer auflösbar waren. Trotzdem ist es Fälschern immer wieder gelungen, die Oberfläche der räumlichen Musterung freizulegen.

Aus der GB-A 1 568 563 ist eine Folie der eingangs erwähnten Art bekannt, bei der eine räumliche Musterung zwischen zwei Lackschichten gebildet ist, wobei die eine Lackschicht transparent sein soll, während die andere Lackschicht pigmentiert ist. Über die Art der verwendeten Lacke ist dabei nichts ausgesagt. Infolge des Umstandes, daß eine Lackschicht pigmentiert ist, ist anzunehmen, daß die Lackschichten nacheinander, und zwar jeweils nach vollständiger Aushärtung der ersten Schicht, aufgebracht sind, wodurch eine Trennung der beiden Lackschichten voneinander und damit Freilegung der räumlichen Musterung durchaus möglich erscheint. Dies gilt insbesondere dann, wenn, wie nach der GB-A 1 568 563 weiter vorgesehen, zwischen den beiden die räumliche Musterung bildenden Lackschichten noch eine Metallisierung vorgesehen ist. Die bekannte Folie ist somit für die angestrebte Verwendung zur Verbesserung der Fälschungssicherheit von Dokumenten nicht geeignet.

Zur Verbesserung der Fälschungssicherheit von Dokumenten ist weiter gemäß US-A 4 469 725 bekannt, zwei Folien miteinander zu verbinden, die jeweils mit miteinander fluchtenden Vertiefungen bzw. Erhebungen versehen sind, wobei allerdings dabei so vorgegangen wird, daß erst die beiden Folien mit den Vertiefungen und Erhebungen versehen und dann so aufeinander gelegt werden, daß die Vertiefungen bzw. Erhebungen einwandfrei ineinandergreifen. Hier läßt sich zwar u.U. erreichen, daß die Trennung der beiden Folien im Bereich der Profilierung nur mit größten Schwierigkeiten möglich ist, sofern geeignete Bindemittel verwendet werden. Nachteilig bei einem Vorgehen gemäß US-A 4 469 725 ist jedoch, daß das Herstellungsverfahren äußerst kompliziert ist und größte Genauigkeit, insbesondere bei der Führung der Folien zum Ineinanderfügen der Profilierung erforderlich ist.

Der Erfindung liegt daher die Aufgabe zugrunde, die Fälschungssicherheit von mehrlagigen Folien, insbesondere Heißprägefolien mit einer beugungsoptisch wirksamen Struktur, zu gewährleisten, indem eine Freilegung der räumlichen Musterung praktisch ausgeschlossen ist, wobei sich diese Verbesserung der Fälschungssicherheit in einfacher, jedoch zuverlässiger Weise erreichen lassen soll. Gleichzeitig soll ein Verfahren zur einfachen Herstellung entsprechender Folien vorgeschlagen werden.

Zur Lösung dieser Aufgabe wird nach der Erfindung bei der eingangs erwähnten Folie nun vorgeschlagen, derart vorzugehen, daß die beiden aufeinanderfolgenden, die räumliche Musterung bildenden Lackschichten transparent sind und aus miteinander vernetzbaren Lacken bestehen.

Die räumliche Musterung wird also bei der Folie gemäß der Erfindung zwischen zwei Lackschichten gebildet, die, nachdem sie beide transparent sind, mechanisch nur sehr schwer voneinander getrennt werden können, weil es im Rahmen der üblichen, mechanischen Verfahren nicht möglich ist, zwei transparente Schichten während des Bearbeitens einwandfrei zu trennen. Im übrigen wird aber die Trennung der Lackschichten vor allem deswegen erschwert, weil sie aus Lacken bestehen, welche miteinander vernetzen, d.h. sich physikalisch und chemisch so miteinander verbinden, daß auch eine Trennung mit Lösemitteln, durch Hitzeeinwirkung etc. ausgeschlossen ist. Die Verwendung von miteinander vernetzenden Lacken kann dabei nicht als naheliegend angesehen werden, weil vor allem im Hinblick auf die Feinheiten beugungsoptisch wirksamer Strukturen eigentlich befürchtet werden muß, daß die Struktur durch den Vernetzungsvorgang zumindest gestört wird. Gerade dies tritt jedoch wider Erwarten nicht ein. Eine derartige Vernetzung erscheint auch bei einem Aufbau der Folie gemäß GB-A 1 568 563 nicht

EP 0 210 619 B1

möglich, weil dies ja ein Wandern von Pigmenten zwischen den beiden Lackschichten bedeuten könnte, wodurch bei der bekannten Folie die Erkennbarkeit der Struktur gestört würde.

Eine besonders sichere Haftung im Bereich der Grenzfläche ergibt sich bei einem Vorgehen nach der Erfindung dann, wenn die die räumliche Musterung bildenden Lackschichten aus durch UV-Strahlung vernetzbaren Acrylat-Lacken, aus durch Wärme vernetzenden Polyurethan-Lacken oder einem Gemisch dieser Lacke bestehen, und zwar vor allem deswegen, weil bei diesen Lacken eine graduelle Aushärtung bzw. Trocknung erfolgen kann, wobei während des Härtungsvorgangs eine Bindung der beiden Lackschichten im Bereich der Grenzfläche eintritt.

Eine Möglichkeit zur Erzeugung unterschiedlicher optischer Eigenschaften der beiden transparenten Lackschichten besteht darin, sie unterschiedlich einzufärben. Besonders günstig ist es jedoch, wenn erfindungsgemäß die die räumliche Musterung bildenden Lackschichten aus Lacken mit stark unterschiedlichem Brechungsindex bestehen.

Um die räumliche Musterung bzw. die beugungsoptisch wirksame Struktur auch für das bloße Auge sichtbar zu machen, kann es günstig sein, wenn, wie nach der Erfindung weiter vorgeschlagen, die Dekorschicht eine nicht durchscheinende, vorzugsweise Metallschicht umfaßt, die auf der der Trägerfolie abgekehrten Fläche der zwischen sich die räumliche Musterung bildenden Lackschichten angeordnet ist.

Die nicht durchscheinende bzw. Metallschicht verstärkt infolge der an ihr auftretenden Reflexion des einfallenden Lichtes die Kontraste im Bereich der die räumliche Musterung aufweisenden Grenzschicht im Vergleich zu einer Folie, bei der lediglich die beiden die Grenzfläche bildenden Lackschichten unterschiedliche optische Eigenschaften aufweisen.

Zur Herstellung von Folien, insbesondere Heißprägefolien, ist es allgemein geläufig, auf die Trägerfolie eine erste Lackschicht aufzubringen, diese dann mit einer räumlichen Musterung zu versehen und aushärten zu lassen, und anschließend eine zweite Lackschicht aufzubringen. Um nun eine Vernetzung der Lackschichten zu erreichen, wie dies nach der Erfindung vorgesehen ist, ist es besonders günstig, wenn nach einem Verfahren gearbeitet wird, bei dem vor der vollständigen Trocknung bzw. Aushärtung der ersten Lackschicht dies mit der räumlichen Musterung versehen und die zweite Lackschicht aufgebracht wird. Durch dieses Vorgehen wird das Entstehen der Bindungen zwischen den Lackschichten stark begünstigt, so daß man eine besonders gute Haftung erreicht.

Weitere Einzelheiten der Erfindung ergeben sich aus der folgenden Beschreibung eines Ausführungsbeispiels einer Folie sowie des Herstellungsverfahrens anhand der Zeichnung. Es zeigen:

Fig. 1 einen Schnitt durch eine Folie nach der Erfindung und
Fig. 2 schematisiert einen Ausschnitt aus einer Vorrichtung zur Herstellung von erfindungsgemäßen Folien.

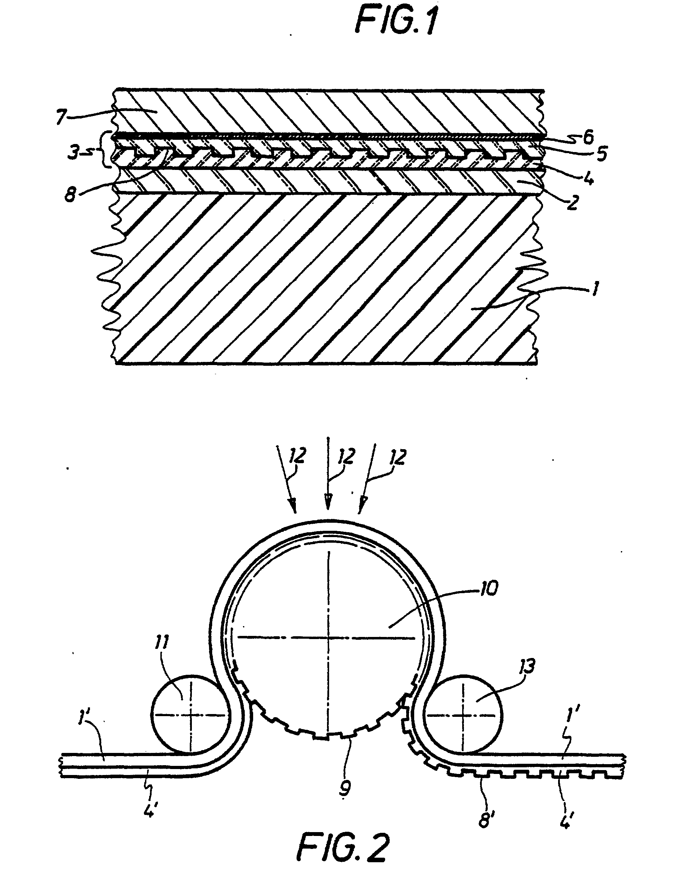

Die Folie nach Figur 1 umfaßt in an sich bekannter Weise eine Trägerfolie 1, beispielsweise eine Polyesterfolie mit einer Dicke von etwa 19 µm. Auf der Trägerfolie 1 ist eine Ablöseschicht 2, beispielsweise eine wachsartige Schicht oder eine spezielle Lackschicht vorgesehen. An die Ablöseschicht 2 schließt eine insgesamt mit 3 bezeichnete Dekorschicht an, die aus einer ersten Lackschicht 4, einer zweiten Lackschicht 5, jeweils in einer Dicke von etwa 1-5 µm, sowie einer beispielsweise aufgedampften Metallschicht 6 besteht.

Die Dekorschicht 3 kann beispielsweise unter Einwirkung von Wärme und Druck von der Trägerfolie 1 abgelöst werden und wird im Gebrauch mittels einer Klebeschicht 7, die z.B. 0,2 bis 0,7 µm stark sein kann, an dem zu dekorierenden bzw. zu schützenden Gegenstand, beispielsweise einer aus Kunststoff bestehenden Kreditkarte befestigt. Die Klebeschicht 7 kann von einem Heißkleber oder von einem speziellen, bei Erwärmung klebrig werdenden Lack gebildet sein.

Wie in Figur 1 schematisch angedeutet, ist die Grenzfläche 8 zwischen den beiden Lackschichten 4 und 5 mit einer räumlichen Musterung versehen. Es handelt sich bei der räumlichen Musterung der Grenzfläche 8 z.B. um eine beugungsoptisch wirksame Struktur, vorzugsweise ein sogenanntes "Hologramm".

Damit die räumliche Musterung bzw. Struktur der Grenzfläche 8 sichtbar ist, sind die Lacke 4 und 5 der Dekorschicht 3 zum einen transparent. Zum anderen besitzen sie deutlich unterschiedliche optische Eigenschaften, vorzugsweise stark unterschiedliche Brechungsindizes.

Die Einbringung der räumlichen Musterung zur Ausbildung der Grenzfläche 8 erfolgt in an sich von der Herstellung von Prägefolien bekannter Weise entweder in einem Hubverfahren oder in einem Abrollverfahren.

Zur Herstellung der Folie sind zwei verschiedene Möglichkeiten vorgesehen, nämlich entweder eine sogenannte Trockentexturierung oder eine Naßtexturierung.

Bei der Trockentexturierung wird ein Lack auf die Trägerfolie 1 aufgebracht und zumindest weitgehend getrocknet. In diesen ersten Lack wird dann in einem Hub- oder Abrollverfahren die räumliche Musterung eingebracht. Anschließend erfolgt dann die Aufbringung der zweiten Lackschicht.

Als erster Lack kann für die Trockentexturierung ein Lack folgender Zusammensetzung verwendet werden, der ganzflächig mit einem Flächengewicht von 2,5 bis 3,0 g/m² auf die Trägerfolie aufgebracht wird:

Lack A

| Zusammensetzung | Gewichts-Teile | Bezeichnung | (Hersteller) |
|---|---|---|---|
| aliphatischer trifunktioneller Acrylester | 1000 | SR 444 | (Sartomer) |
| Reaktivverdünner | 200 | SR 285 | (Sartomer) |
| Siliconmodifiziertes Polyesterharz | 300 | Silico ftal HTL | (Goldschmidt) |
| Hydroxylgruppenhaltiges Acrylharz | 1500 | G-Cure 867 | (Henkel) |
| Photoinitiator | 100 | Dorocur 1664 | (Merck) |
| aromatische polyfunktionelle Isocyanatkomponente | 1400 | Desmodur IL | (Bayer) |
| Toluol | 2000 | | |
| Methylethylketon | 500 | | |

Bei Einbringung der Texturierung in die aus dem Lack A gebildete Lackschicht wird im Hubverfahren beispielsweise mit einem Flächendruck von 1 Tonne/cm², einer Temperatur von 110°C und einer Druckdauer von 0,4 sec. gearbeitet. Sofern ein Abrollverfahren für die Einbringung der räumlichen Musterung zur Anwendung kommt, kann mit einem Liniendruck von 150 kp/cm, einer Temperatur von etwa 110°C und einer Laufgeschwindigkeit der Rolle bzw. Folie mit dem Lack von 15 m/min. gearbeitet werden.

Die zweite Lackschicht wird ebenfalls ganzflächig mit einem Flächengewicht von 1,0 bis 1,5 g/m² aufgebracht, wobei beispielsweise folgender Lack verwendet werden kann:

Lack B

| Zusammensetzung | Gewichts-teile | Bezeichnung | (Hersteller) |
|---|---|---|---|
| Hydroxylgruppenhaltiger aliphatischer pentafuntioneller Acrylester | 1000 | SR 399 | (Sartomer) |
| aliphatisches Polyester-urethanacrylat | 1000 | Genomer T 1200 | (Rahn) |
| Photoinitiator | 800 | Irgacune 651 | (Ciba) |
| Methylethylketon | 1500 | | |

Die Verbindung der Schichten aus den Lacken A und B erfolgt durch Vernetzung zwischen den nicht vollständig ausgehärteten Bestandteilen der beiden Lackschichten anschließend an die Aufbringung der zweiten Lackschicht, wodurch eine praktisch nicht lösbare Verbindung im Bereich der Grenzfläche 8 entsteht.

Sofern ein rascheres Arbeiten gewünscht ist, wird im Wege der Naßtexturierung gearbeitet. Die Aufbringung der ersten Lackschicht ist dabei schematisch in Fig. 2 dargestellt. Die erste Lackschicht 4' und gegebenenfalls die Ablöseschicht 2 werden in an sich bekannter Weise, beispielsweise in einem Tiefdruckverfahren auf die Trägerfolie 1' aufgetragen. Die Trägerfolie 1' mit der ersten Lackschicht 4' läuft dann so über die Oberfläche einer eine räumliche Musterung 9 aufweisenden, gekühlten und mitgedrehten Walze 10, daß die erste Lackschicht 4' zur räumlichen Musterung 9 weist und somit beim Lauf über die Walze 10 entsprechend zur Ausbildung der Grenzschicht 8' texturiert wird. Die Trägerfolie 1' mit der Lackschicht 4' wird mittels einer Gummiwalze 11 gegen die texturierte Walze 10 angepreßt. Während der weiteren Umschlingung der texturierten Walze 10 durch die Trägerfolie 1' mit der Lackschicht 4' erfolgt, wie durch die Pfeile 12 angedeutet, eine Bestrahlung mit UV-Strahlen, und zwar von der Rückseite der Trägerfolie 1' hindurch, was bedeutet, daß die UV-Strahlung 12 nach entsprechender Schwächung in der Trägerfolie 1' die Lackschicht 4' erreicht. Wenn die Trägerfolie 1' aus Polyestermaterial besteht, ist im allgemeinen davon auszugehen, daß nur Strahlung mit einer Wellenlänge von mehr als 360 nm durchgelassen wird, wodurch nur eine teilweise Härtung des durch UV-Strahlung härtbaren Lackes 4' erfolgt.

Die Trägerfolie 1' mit der die Grenzfläche 8' bildenden Lackschicht 4' läuft anschließend an die texturierte Walze 10 über eine Ablösewalze 13, wodurch die Trägerfolie 1' mit der Lackschicht 4' von der texturierten Walze 10 gelöst wird.

Die Fertigstellung der gem. Figur 2 mit der ersten Lackschicht 4' versehenen Folie erfolgt dann derart, daß auf die Lackschicht 4' im Tiefdruckverfahren eine weitere Schicht eines härtbaren Lackes aufgetragen wird, wobei dann die endgültige Härtung der beiden Lackschichten 4', 5 abhängig von deren Zusammensetzung entweder durch erneute UV-Bestrahlung oder durch Wärmeeinwirkung erfolgt.

Für die Naßtexturierung können folgende Lacke eingesetzt werden:
Für die erste Lackschicht 4' ein Lack C, der ganzflächig mit einem Flächengewicht von 1,5 bis 2,0 $g/m^2$ aufgetragen wird:

## Lack C

| Zusammensetzung | Gewichts-teile | Bezeichnung | (Hersteller) |
|---|---|---|---|
| aliphatischer, silicon-modifizierter Acrylester | 1000 | Siliconacrylat VP 6536 | (Röhm) |
| Hydroxylgruppenhaltiger, aliphatischer pentafunktioneller Acrylester | 1000 | SR 399 | (Sartomer) |
| aliphatisches Polyester-urethanacrylat | 1000 | Genomer D 900 | (Rahn) |
| Photoinitiator | 80 | Dorocur 1664 | (Merck) |
| Methylethylketon | 1500 | | |

Für die zweite Lackschicht ist ein Lack D, dessen Auftrag ebenfalls ganzflächig ist, z.B. im Tiefdruckverfahren, mit einem Flächengewicht von 1.0 bis 1,5 $g/m^2$ erfolgt.

## Lack D

| Zusammensetzung | Gewichts-teile | Bezeichnung | (Hersteller) |
|---|---|---|---|
| aliphatischer, trifunktioneller Acrylester | 1000 | SR 444 | (Sartomer) |
| Reaktivverdünner | 2000 | SR 285 | (Sartomer) |
| aliphatisches Polyesterure-thanacrylat | 1000 | Genomer D 900 | (Rahn) |
| aliphatisches Polyester-acrylat | 1000 | Prepoliner VSP 2051 | (Degussa) |
| copolymerisierendes tertiäres Amin | 600 | Uvecryl P 101 | (UCB) |
| Photoinitiator | 400 | Irgacune 651 | (Ciba) |
| Methylethylketon | 1000 | | |

Anstelle der vorstehend erläuterten Lacke B und D, die jeweils mittels UV-Strahlung härtbar sind, wäre es auch möglich, folgenden Lack E, einen vernetzenden Polyurethan-Lack, einzusetzen:

## Lack E

| Zusammensetzung | Gewichts-teile | Bezeichnung | (Hersteller) |
|---|---|---|---|
| niedrig-viskose Nitrocellulose | 600 | Collodium-Wolle E330 | (Wolff) |
| hochmolekulares Polymethyl-metacrylharz | 600 | Plexigum M 527 | (Röhm) |
| Siliconmod. Polyesterharz | 150 | Silicoftal HTL | (Goldschmidt) |
| hydroxylgruppenhaltiges Poly-methylmetacrylatharz | 600 | Degalan LS 150/300 | (Degussa) |
| aromatische, polyfunktio-nelle Isocyanatkomponente | 1400 | Desmodur IL | (Bayer) |
| Ehtylacetat | 2000 | | |
| Methylethylketon | 2400 | | |
| Cylohexanon | 600 | | |

Bei Verwendung des Lackes E muß eine thermische Härtung, beispielsweise in einem Trockenschrank bei einer Temperatur von etwa 70 bis 80°C während 12 Stunden, erfolgen.

Wenn die beiden Lackschichten 4, 5 auf die Trägerfolie 1 aufgebracht sind, kann dann gegebenenfalls noch die Metallschicht 6, beispielsweise durch Vakuum-Aufdampfen, aber auch durch Sputtering, aufgebracht werden. Es wäre auch denkbar, farbige Lackschichten vorzusehen etc. Die Folie wird dann durch Aufbringung der Klebeschicht 7 fertiggestellt.

## Patentansprüche

1. Mehrlagige Folie, insbesondere Heißprägefolie, bestehend aus einer Trägerfolie, einer mit einer räumlichen Musterung, vorzugsweise einer beugungsoptisch wirksamen Struktur, versehenen, mindestens zwei aufeinanderfolgende Lackschichten umfassenden Dekorschicht sowie gegebenenfalls einer auf der Trägerfolie abgekehrten Seite der Dekorschicht angeordneten Klebeschicht, wobei die beiden aufeinanderfolgenden Lackschichten deutlich unterschiedliche optische Eigenschaften aufweisen und die Grenzfläche zwischen den Lackschichten die räumliche Musterung bildet, dadurch gekennzeichnet, daß die beiden aufeinanderfolgenden, die räumliche Musterung bildenden Lackschichten (4, 5) transparent sind und aus miteinander vernetzbaren Lacken bestehen.

2. Folie nach Anspruch 1, dadurch gekennzeichnet, daß die die räumliche Musterung (8) bildenden Lackschichten (4, 5) aus durch UV-Strahlung vernetzbaren Acrylat-Lacken, aus durch Wärme vernetzenden Polyurethan-Lacken oder einem Gemisch dieser Lacke bestehen.

3. Folie nach Anspruch 1 oder 2, dadurch gekennzeichnet, daß die die räumliche Musterung (8) bildenden Lackschichten (4, 5) aus Lacken mit stark unterschiedlichem Brechungsindex bestehen.

4. Folie nach einem der Ansprüche 1 bis 3, dadurch gekennzeichnet, daß die Dekorschicht (3) eine nicht durchscheinende, vorzugsweise Metallschicht (6) umfaßt, die auf der Trägerfolie (1) abgekehrten Fläche der zwischen sich die räumliche Musterung (8) bildenden Lackschichten (4, 5) angeordnet ist.

5. Verfahren zur Herstellung von Folien nach einem der vorhergehenden Ansprüche, wobei auf die Trägerfolie eine erste Lackschicht aufgebracht, diese dann mit der räumlichen Musterung versehen und anschließend eine zweite Lackschicht aufgebracht wird, dadurch gekennzeichnet, daß vor der vollständigen Trocknung bzw. Aushärtung der ersten Lackschicht diese mit der räumlichen Musterung versehen und die zweite Lackschicht aufgebracht wird.

## Claims

1. Multilayered film, in particular heat-embossable film, consisting of a base film, a decorative layer, provided with a three-dimensional pattern, preferably a structure having an optically diffractive effect, and comprising at least two successive layers of lacquer, as well as possibly consisting of an adhesive layer arranged on the side of the base film away from the decorative layer, the two successive layers of lacquer having distinctly different optical characteristics and the interface between the layers of lacquer forming the three-dimensional pattern, characterized in that the two successive layers of lacquer (4, 5) forming the three-dimensional pattern are transparent and consist of lacquers which can be crosslinked with each other.

2. Film according to Claim 1, characterized in that the layers of lacquer (4, 5) forming the three-dimensional pattern (8) consist of acrylate lacquers which can be crosslinked by UV radiation, of polyurethane lacquers which can be crosslinked by heat, or a mixture of these two lacquers.

3. Film according to Claim 1 or 2, characterized in that the layers of lacquer (4, 5) forming the three-dimensional pattern (8) consist of lacquers each having a very different refractive index.

4. Film according to one of Claims 1 to 3, characterized in that the decorative layer (3) comprises a non-translucent, preferably metal layer (6), which is arranged on the surface away from the base film (1) of the layers of lacquer (4, 5) forming the three-dimensional pattern (8) between them.

5. Method of producing films according to one of the preceding claims, a first layer of lacquer being applied to the base film, the said layer then being provided with the three-dimensional pattern and subsequently a second layer of lacquer being applied, characterized in that, before complete drying or curing of the first layer of lacquer, it is provided with the three-dimensional pattern and the second layer of lacquer is applied.

**Revendications**

1. Feuille multicouche, en particulier feuille déformable par estampage à chaud, se composant d'une feuille support, d'une couche décorative comprenant au moins deux couches consécutives de vernis et comportant un dessin en relief, de préférence une structure à effet optique de diffraction, ainsi qu'éventuellement une couche de colle disposée sur la face, opposée à la feuille support, de la couche décorative, les deux couches consécutives de vernis ayant des propriétés optiques nettement distinctes et l'interface située entre les deux couches de vernis formant le dessin en relief, caractérisée en ce que les deux couches consécutives de vernis (4, 5) formant le dessin en relief sont transparentes et se composent de vernis réticulables entre eux.

2. Feuille selon la revendication 1, caractérisée en ce que les couches de vernis (4, 5) formant le dessin en relief (8) se composent de vernis d'acrylate réticulables au moyen d'un rayonnement ultraviolet, de vernis se réticulant sous l'action de la chaleur ou d'un mélange de ces vernis.

3. Feuille selon la revendication 1 ou 2, caractérisée en ce que les couches de vernis (4, 5) formant le dessin en relief se composent de vernis ayant des indices de réfraction fortement différenciés.

4. Feuille selon l'une quelconque des revendications 1 à 3, caractérisée en ce que la couche décorative (3) comprend une couche non transparente, de préférence une couche métallique, qui est disposée sur la face, opposée à la feuille support (1), des couches de vernis (4, 5) formant entre elles le dessin en relief (8).

5. Procédé de fabrication de feuilles selon l'une quelconque des revendications précédentes, dans lequel on applique une première couche de vernis sur la feuille support, puis on revêt ladite couche de vernis du dessin en relief, puis on applique une seconde couche de vernis, caractérisé en ce qu'on revêt la première couche de vernis du dessin en relief et on applique la seconde couche de vernis avant le séchage complet ou le durcissement complet de ladite première couche de vernis.

## FIG.1

## FIG.2